# EUROPÄISCHE PATENTSCHRIFT

(11) **EP 1 856 426 B1**
(45) Veröffentlichungstag und Bekanntmachung des Hinweises auf die Patenterteilung: **13.05.2009**
(21) Anmeldenummer: 06706442.8
(22) Anmeldetag: 27.01.2006
(51) Int. Cl.: F16H 7/08, F16H 7/18, F01L 1/02

(54) **SPANNSCHIENE FÜR EINEN ZUGMITTELTRIEB**
SLIDING RAIL FOR A TRACTION MECHANISM DRIVE
RAIL TENDEUR POUR UN ENTRAINEMENT PAR MOYEN DE TRACTION

(30) Priorität: 09.03.2005 DE 102005010749
(43) Veröffentlichungstag der Anmeldung: 21.11.2007
(73) Patentinhaber: Schaeffler KG, 91074 Herzogenaurach (DE)
(72) Erfinder: SCHENK, Rainer, 90587 Tuchenbach (DE); ASSEL, Martin, 91593 Burgbernheim (DE)
(86) Internationale Anmeldenummer: PCT/EP2006/000703
(87) Internationale Veröffentlichungsnummer: WO 2006/094579

(56) Entgegenhaltungen:
- EP-A- 0 823 543
- EP-A- 0 945 651
- DE-A1- 3 738 895
- DE-A1- 4 212 309
- DE-A1- 10 247 419

## Beschreibung

### Gebiet der Erfindung

Die Erfindung betrifft einen Zugmitteltrieb einer Brennkraftmaschine, der einem Ölnebel ausgesetzt ist, bzw. deren Zugmittel in einem Ölnebel umläuf entsprechend dem Oberbegriff des Anspruchs 1 und wie er aus der DE 10247419A bekannt ist. Der Zugmitteltrieb umfasst ein antreibendes Rad sowie zumindest ein angetriebenes Rad, die über das Zugmittel verbunden sind. Ein zur Erzielung eines ausreichend vorgespannten Zugmittels eingesetztes Spannsystem umfasst eine schwenkbare, von einem Kraftmittel beaufschlagbare Spannschiene.

### Hintergrund der Erfindung

Die DE 34 34 428 A1 bezieht sich auf einen als Steuerungsantrieb bezeichneten Zugmitteltrieb einer Brennkraftmaschine. Das antreibende Rad des Zugmitteltriebs taucht dabei in ein Ölbad ein, wodurch das als Zahnriemen ausgebildete Zugmittel zwangsläufig stets in das Ölbad eintaucht.

Das US-Patent 6,000,373 offenbart einen Steuertrieb für eine Brennkraftmaschine, bei dem das Zugmittel ein mit der Kurbelwelle verbundene antreibende Rad mit einem der Nockenwelle zugeordneten angetriebenen Rad verbindet. Dieser Zugmitteltrieb ist außerdem zum Antrieb einer in einem Ölbad eintauchenden Schmierölpumpe bestimmt. Als Zugmittel ist ein innen- und außenverzahnter Endlosriemen vorgesehen, wobei der Antrieb der Schmierölpumpe über die Außenverzahnung des Riemens erfolgt und das antreibende Rad und das angetriebene Rad des Zugmitteltriebs über die Innenverzahnung des Zahnriemens verbunden sind.

Weiterhin ist es bekannt, Spannsysteme zur Erzielung einer ausreichenden Vorspannung des Zugmittels von Zugmitteltrieben einzusetzen. Dazu bietet sich beispielsweise eine Spannschiene bzw. Führungsschiene an, die um eine Drehachse schwenkbar und von einem Kraftmittel beaufschlagt ist. Die kraftschlüssig an dem Zugmittel abgestützte Schiene verursacht eine erhöhte Reibung des Zugmitteltriebs und ist nachteilig einem Verschleiß unterworfen, was sich nachteilig insbesondere auf die Lebensdauer des Zugmittels auswirkt.

### Zusammenfassung der Erfindung

Der Erfindung liegt die Problemstellung zugrunde, für einen Zugmitteltrieb ein reibungsoptimiertes Spannsystem zu schaffen, bei dem das Zugmittel von einem Ölnebel beaufschlagt ist.

Diese Aufgabenstellung wird durch die Merkmale des Anspruchs 1 gelöst. Danach schließt der Zugmitteltrieb als Spannsystem eine von einem Kraftmittel beaufschlagte Führungsschiene ein, die über zumindest eine drehbare Führungsrolle an dem Zugmittel abgestützt ist. Die Führungsrolle bildet dabei zumindest im Bereich der Führungsrolle ein U-förmiges Profil, das zwei axial beabstandete Wandungen einschließt. Im eingebauten Zustand des Spannsystems ist das Zugmittel zwischen den Wandungen geführt. Weiterhin ist in zumindest eine Wandung eine Öffnung oder Aussparung vorgesehen, deren Lage mit einer Lagerung der Führungsrolle übereinstimmt. Das erfindungsgemäße Spannsystem-Konzept gewährleistet eine optimale Vorspannung des Zugmittels, wobei sich gleichzeitig aufgrund des ölbenetzten Zugmittels Vorteile hinsichtlich verbesserter Reibung, erhöhter Lebensdauer und geringer Geräuschentwicklung einstellen. Außerdem ist eine für die Funktion des Zugmitteltriebs verbesserte Führung des Zugmittels zumindest im Bereich des Spannsystems gewährleistet, aufgrund des U-förmigen Profils der Führungsschiene im Bereich der Führungsrolle. Die Öffnung oder Aussparung in zumindest einer Wandung der Führungsrolle ermöglicht eine unmittelbare Beaufschlagung der Lagerung der Führungsrolle mit dem Ölnebel oder einem in dem geschlossenen Einbauraum des Zugmitteltriebs integrierten Schmierstoffs. Als Lager für die Führungsrolle eignen sich vorzugsweise Wälzlager. Neben einer verbesserten unmittelbaren Schmierung der Führungsrolle stellt sich damit gleichzeitig eine verbesserte Wärmeabfuhr der Führungsrolle bzw. deren Lagerung ein, was sich ebenfalls vorteilhaft auf die Lebensdauer auswirkt.

Die Erfindung nimmt weiterhin unmittelbaren Einfluss auf die Reibung des Zugmittels. Aufgrund des von einem Ölnebel beaufschlagten in einem gekapselten, bzw. geschlossenen Einbauraum umlaufenden Zugmittel stellt sich eine gewünschte reduzierte Reibung ein, was die Lebensdauer des Zugmittels sowie den Wirkungsgrad der Brennkraftmaschine erhöht, wodurch sich ein Verbrauchsvorteil der Brennkraftmaschine einstellt.

Der Zugmitteltrieb gemäß der Erfindung ist in einem teilweise mit Schmieröl befüllten Einbauraum integriert, wobei das Zugmittel in einem Ölbad umläuft oder von einem Ölnebel beaufschlagt wird. Durch die Ausnehmungen bzw. Öffnungen in den Wandungen der Führungsschiene stellt sich eine verbesserte Zirkulation des Ölnebels im Bereich der Führungsschiene ein, was den Wälzkontakt des Wälzlagers sowie eine Kontaktreibung zwischen dem Zugmittel und der Führungsrolle vorteilhaft verringert.

In vorteilhafter Weise ermöglicht das erfindungsgemäße Konzept weiterhin den Austausch des Zugmittels. Der Hersteller des Fahrzeugs oder der Brennkraftmaschine kann bei Bedarf das als Kette ausgelegte oder eingesetzte Zugmittel durch einen Endlosriemen ersetzen. Für einen Riemen oder Zahnriemen, der in dem vor Umwelteinflüssen geschützten, d. h. geschlossenen Einbauraum eingesetzt ist und aufgrund des Ölnebels reibungsoptimiert umläuft, ist eine Lebensdauer erreichbar, die sich von einer Kette nicht unterscheidet. Durch die Verwendung eines Riemens anstelle der Kette verringert sich vorteilhaft das Gewicht und das Geräuschniveau des Zugmitteltriebs. Außerdem stellt sich für den erfindungsgemäßen, wartungsfreien Riementrieb ein Kostenvorteil ein.

Weitere vorteilhafte Ausgestaltungen der Erfindung sind Gegenstand der abhängigen Ansprüche 2 bis 17.

Gemäß einer bevorzugten Ausgestaltung der Erfindung ist die Führungsschiene im Bereich der Führungsrollen mit einem sogenannten Einzug versehen. Dieser an den Wandungen angebrachte, zueinander gerichtete Einzug ermöglicht eine auf die Breite des Zugmittels abgepasste Führungsbreite, wodurch das Zugmittel ausschließlich zwischen den Einzügen beider Wandungen geführt ist. Dadurch verringert sich vorteilhaft die Kontaktfläche zwischen der Führungsschiene und dem Zugmittel, was sich gleichfalls auf die Reibung auswirkt. Zur Vermeidung einer Kollision ist der Einzug so an der Wandung positioniert, dass dieser außerhalb des Lagerdurchmessers bzw. der gesamten Führungsrolle liegt. Vorteilhaft ist die Öffnung oder Aussparung in der Wandung der Führungsschiene, durch die das Führungsrollenlager mit Öl oder einem Schmierstoff beaufschlagt werden kann, zwischen dem Einzug und einer Aufnahmebohrung für die Führungsrollenlagerung platziert.

Als Führungsschiene eignet sich insbesondere ein Blechkörper, der einstückig gestaltet, vorzugsweise durch ein Tiefziehverfahren spanlos herstellbar ist. Damit ist die weitestgehend ein U-förmiges Querschnittsprofil aufweisende Führungsschiene auch in großen Stückzahlen kostengünstig herstellbar.

Eine vorteilhafte Weiterentwicklung der Führungsschiene sieht vor, diese mit zwei beabstandeten, vorzugsweise an den Enden der Führungsschiene angeordneten Führungsrollen zu versehen. Damit ist beispielsweise der Umschlingungswinkel des Zugmittels an benachbarten Riemenrädern des Zugmitteltriebs unmittelbar beeinflussbar. Die Führungsschiene kann bei Bedarf außerdem mit mehr als zwei Führungsrollen ausgestattet werden, beispielsweise für eine sichelartig gestaltete Führungsschiene, um beispielsweise eine gezielte, von der Kontur der Brennkraftmaschine bestimmte Zugmittelführung zu realisieren. Die Führungsrollen der Führungsschiene sind bevorzugt wälzgelagert.

Als weitere Maßnahme, um die Geräuschentwicklung des Zugmitteltriebs zu verbessern, schließt die Erfindung eine Führungsrolle ein, bei dem ein Außenring des Wälzlagers von einer aus Kunststoff hergestellten Laufrolle umschlossen ist. Dieser kunststoffummantelte äußere Lagerring des Wälzlagers, zur Bildung der Laufrolle, kann außerdem profiliert sein, beispielsweise mittels einer U-förmigen Aufnahme, die maßlich so ausgelegt ist, dass darin das Zugmittel geführt ist. Eine solche Laufrolle ermöglicht eine vereinfachte Gestaltung der Führungsschiene, die beispielsweise im Bereich der Führungsrolle weder einen axialen Einzug noch ein U-förmiges Profil erfordert.

Ein weiterer Kostenvorteil der Erfindung ist durch die Verwendung von Wälzlager ohne Dichtungen erzielbar. Diese keinerlei Abdichtung aufweisenden Wälzlager sind kostengünstiger herstellbar. Aufgrund der fehlenden Dichtung wird vorteilhaft die Lagerreibung und eine damit in Verbindung stehende Erwärmung des Wälzlagers reduziert. Dieses Lager ist prädestiniert zum Einsatz von Zugmitteltrieben, die in einem geschlossenen Einbauraum integriert sind, wobei ein Schmiermittel, Schmierstoff oder Ölnebel unmittelbar die Wälzkörper und deren Laufbahnen der Wälzlagerung beaufschlagen und damit eine ausreichende Schmierung sicherstellen.

Ein bevorzugter Aufbau der Führungsschiene sieht vor, diese endseitig mit einem eine Drehachse einschließenden Drehlager zu versehen. Das zur Verstellung der Führungsschiene erforderliche Kraftmittel ist dabei beabstandet zu dem Drehlager der Führungsschiene zugeordnet.

Ein vorteilhafter Aufbau der Führungsschiene umfasst bevorzugt zwei axial beabstandete, durch Verbindungsstege fixierte, auch als Wangen zu bezeichnende Wandungen. Ein solcher spanlos hergestellter Blechkörper dient zur Aufnahme von Lagerbolzen, auf denen die Führungsrollen vorzugsweise über Wälzlager drehbar gelagert sind. Außerdem bildet dieser Blechkörper einen Abstützpunkt oder Auflage, an der sich das Kraftmittel abstützt. Der Verbindungssteg kann dabei vorteilhaft eine Doppelfunktion übernehmen, d. h. ergänzend zu einer Verbindung beider Flachprofile der Führungsschiene stützt sich an dem Verbindungssteg im eingebauten Zustand gleichzeitig das Kraftmittel ab. Außerdem weisen beide Flachprofile bzw. Wandungen der Führungsschiene eine Bohrung auf, die mit einer ortsfesten Drehachse das Drehlager bilden.

Alternativ zu einer als Blechkörper aufgebauten Führungsschiene schließt die Erfindung eine als Kunststoff-Spritzgussteil gestaltete Spannschiene ein. Als Kunststoff mit einer ausreichenden hohen Steifigkeit bzw. Festigkeit eignet sich dazu beispielsweise Kevlar oder ein mit Glasfasern armierter Kunststoff.

Der erfindungsgemäße Zugmitteltrieb schließt bevorzugt ein hydraulisch wirkendes Kraftmittel ein, das mit der Führungsschiene in Wirkverbindung steht. Alternativ oder ergänzend eignet sich als Kraftmittel eine Feder, z. B. eine als Druckfeder ausgeführte Schraubenfeder, die einerseits ortsfest, beispielsweise an der Brennkraftmaschine abgestützt ist und deren weiteres Ende mit der Führungsschiene in Verbindung steht. Als alternatives Kraftmittel bietet es sich an einen elektrisch ansteuerbaren Aktuator einzusetzen, beispielsweise einen von einem Stellmotor betätigbaren Kugelgewindetrieb.

Der Zugmitteltrieb gemäß der Erfindung ist bevorzugt in Steuertrieben von Brennkraftmaschinen einsetzbar, der zum Antrieb einer oder mehrerer Nockenwellen bestimmt ist. Alternativ eignet sich das Spannsystem im Verbindung der erfindungsgemäßen Führungsschiene für einen sogenannten Aggregatetrieb. Dieser Zugmitteltrieb treibt unterschiedliche Aggregate der Brennkraft-maschine an wie, beispielsweise, Wasserpumpe, Lenkhilfspumpe, Generator oder Klimakompressor.

Als Zugmittel ist gemäß der Erfindung ein aus einem ölresistenten Werkstoff hergestellter Endlosriemen vorgesehen, wozu sich bevorzugt ein Elastomer oder Polyurethan eignet.

Als geschlossen gestalteter Einbauraum, in dem der Zugmitteltrieb gemäß der Erfindung integriert ist, ist vorzugsweise ein der Brennkraftmaschine stirnseitig vorgelagertes Gehäuses vorgesehen, das einen Deckel umfasst, der eine Montage oder Demontage des Zugmittels ermöglicht.

### Kurze Beschreibung der Zeichnungen

In den Zeichnungen sind Ausführungsbeispiele der Erfindung dargestellt. Es zeigen:
- Figur 1: einen Zugmitteltrieb in Verbindung eines erfindungsgemä- ßen Spannsystems, integriert in einem geschlossenen Ein- bauraum;
- Figur 2: einen Ausschnitt einer Führungsschiene des erfindungs- gemäßen Spannsystems;
- Figur 3: eine Draufsicht des in Figur 2 abgebildeten Führungs- schienenausschnitts;
- Figur 4: in einer Schnittdarstellung eine Führungsrolle, die einer Führungsschiene zugeordnet ist.

### Detaillierte Beschreibung der Zeichnungen

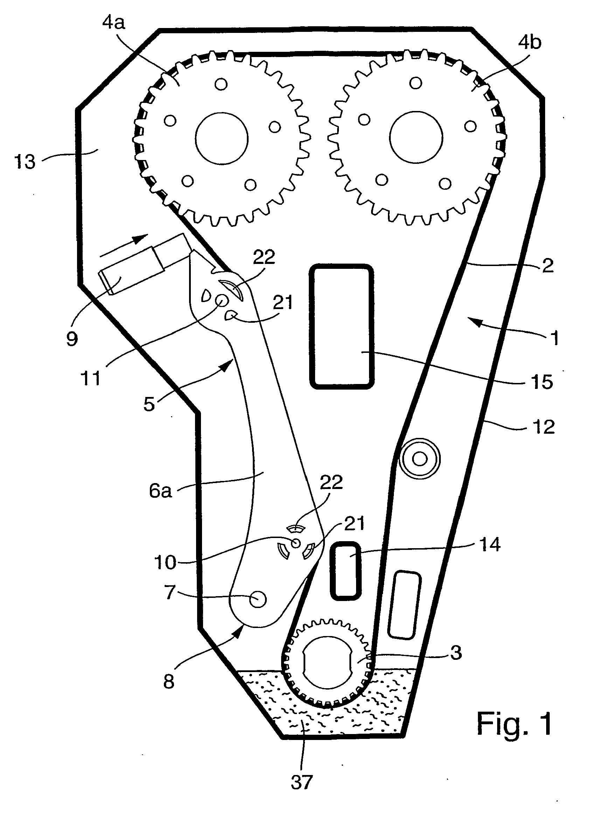

In der Figur 1 ist ein Zugmitteltrieb 1 dargestellt, der als Steuertrieb einer Brennkraftmaschine vorgesehen ist. Dabei verbindet ein Zugmittel 2 ein der Kurbelwelle einer Brennkraftmaschine zugeordnetes antreibendes Rad 3 mit zwei angetriebenen Rädern 4a, 4b, die jeweils mit einer Nockenwelle der Brennkraftmaschine in Verbindung stehen. Dem im Uhrzeigersinn umlaufenden Zugmitteltrieb 1 ist im Leertrum ein Spannsystem 5 zugeordnet, das eine Führungsschiene 6a umfasst, welche um eine ortsfeste Drehachse 7 mittels eines Drehlagers 8 schwenkbar ist. Zur Erzielung einer Vorspannung des Zugmittels 2 wird die Führungsschiene 6a über ein in Pfeilrichtung wirkendes Kraftmittel 9 im Uhrzeigersinn verschwenkt. Dabei ist das Zugmittel 2 an zwei versetzt zueinander angeordneten Führungsrollen 10, 11 der Führungsschiene 6 geführt.

Der Zugmitteltrieb 1 ist in einem Gehäuse 12 integriert, das einen geschlossenen Einbauraum 13 bildet. Zur Montage bzw. Demontage einzelner Bauteile des Zugmitteltriebs 1 ist das Gehäuse 12 mit einem in Figur 1 nicht abgebildeten Deckel versehen. Der Einbauraum 13 ist zum Teil mit Schmierstoff, insbesondere einem Schmieröl gefüllt und bildet ein mit einer Schmierölwanne der Brennkraftmaschine in Verbindung stehendes Ölbad 37. Ein Schmiermittel- bzw. Schmierstoffausgleich zwischen dem Einbauraum 13 und der Brennkraftmaschine erfolgt dabei über eine Öffnung 14, die eine Füllhöhe definiert. Eine weitere oberhalb der Öffnung 14 dem Einbauraum 13 zugeordnete Öffnung 15 ermöglicht einen Austausch eines Ölnebels zwischen dem Einbauraum 13 und dem Kurbelgehäuse der Brennkraftmaschine.

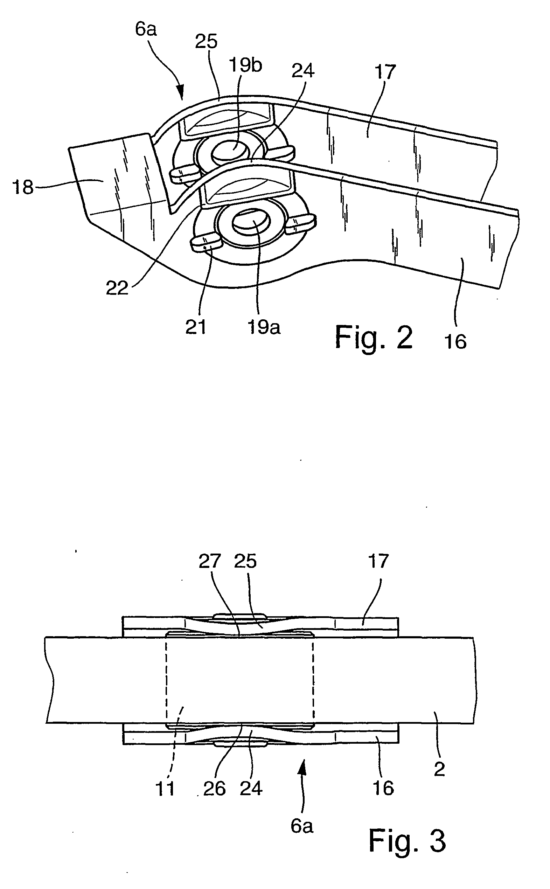

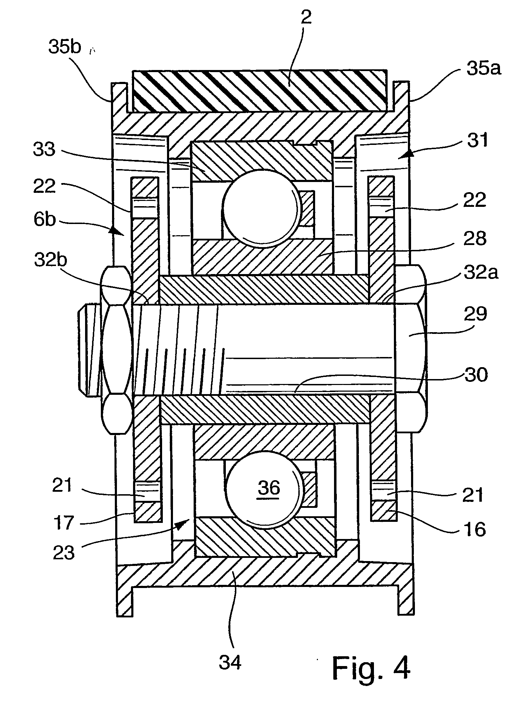

Die Figur 2 zeigt einen Ausschnitt der Führungsschiene 6a, die im wesentlichen zwei parallel beabstandete, als Flachprofil ausgeführte Wandungen 16, 17 umfasst, die mittels eines Stegblechs 18 verbunden sind. Die Führungsschiene 6a ist so konzipiert, dass dieses Bauteil spanlos herstellbar ist. Zur Aufnahme der Führungsrolle 11 weist die Führungsschiene 6a in jeder Wandung 16, 17 jeweils eine Bohrung 19a, 19b auf, zur Aufnahme eines in Figur 4 abgebildeten' Lagerbolzens 20, auf dem die Führungsrolle 11 drehbar gelagert ist. Übereinstimmend sind in beide Wandungen 16, 17 im Bereich der Führungsrolle 11 Ausnehmungen 21, 22 eingebracht, durch die Schmiermittel bzw. ein Ölnebel hindurchtreten kann, um gezielt das in Figur 4 abgebildete Wälzlager 23 zu beaufschlagen. Dieser Aufbau ermöglicht eine gezielte, sichere Schmierung der Führungsrollen 10, 11.

Die Figur 3 zeigt den Ausschnitt der Führungsschiene 6a gemäß Figur 2 in der Draufsicht. Diese Abbildung verdeutlicht die Gestaltung eines Einzugs 24, 25 in Form einer nach innen gewölbten Randzone beider Wandungen 16, 17. Durch die zueinander gegenüberliegt ausgerichteten Einzüge 24, 25 stellt sich eine verringerte Führungsbreite der Wandungen 16, 17 für das Zugmittel 2 ein. Vorteilhaft ergibt sich dadurch eine verringerte Kontaktfläche zwischen dem Zugmittel 2 und der Führungsschiene 6a, die sich jeweils beschränkt auf Kontaktzonen 26, 27 im Bereich der Führungsrollen 10, 11.

Die in Figur 4 abgebildete Führungsrolle 31 zeigt den Aufbau des Wälzlagers 23, dessen Innenring 28 auf dem Lagerbolzen 20 aufgepresst und mittig zentriert ist. Dabei ist der Lagerbolzen 20 zwischen den Flachprofilen 16, 17 eingesetzt und mittels einer Verschraubung 29 lösbar mit den Flachprofilen 16, 17 und damit der Führungsschiene 6b verbunden. Dazu ist eine in die Innenbohrung 30 des Lagerbolzens 20 sowie zugehörige Bohrungen 32a, 32b der Wandungen 16, 17 eingesetzte Verschraubung 29 vorgesehen. Der Außenring 33 des Wälzlagers 23 ist von einer aus Kunststoff hergestellten Laufrolle 34 umschlossen, welche eine Ummantelung des Wälzlagers 23 bildet und jeweils stirnseitig radial nach außen gerichtete Borde 35a, 35b einschließt.

Die Laufrolle 34 und damit die Führungsrolle 31 ermöglicht über die Borde 35a, 35b eine unmittelbare Führung des Zugmittels 2. Das Wälzlager 23 weist zwischen dem Innenring 28 und dem Außenring 33 keine Abdichtung auf, so dass im eingebauten Zustand der Führungsschiene 31, beispielsweise ein Schmieröl oder ein Ölnebel durch die Ausnehmungen 21, 22 der Wandungen 16, 17 unmittelbar in das Wälzlager 23 eintreten kann. Vorteilhaft sind dazu die Ausnehmungen 21, 22 übereinstimmend mit der Einbaulage der Wälzkörper 36 des Wälzlagers 23 in den Wandungen 16, 17 eingebracht.

### Bezugszahlen

- 1: Zugmitteltrieb
- 2: Zugmittel
- 3: Rad (antreibend)
- 4a: Rad (angetrieben)
- 4b: Rad (angetrieben)
- 5: Spannsystem
- 6a: Führungsschiene
- 6b: Führungsschiene
- 7: Drehachse
- 8: Drehlager
- 9: Kraftmittel
- 10: Führungsrolle
- 11: Führungsrolle
- 12: Gehäuse
- 13: Einbauraum
- 14: Öffnung
- 15: Öffnung
- 16: Wandung
- 17: Wandung
- 18: Stegblech
- 19a: Bohrung
- 19b: Bohrung
- 20: Lagerbolzen
- 21: Ausnehmung
- 22: Ausnehmung
- 23: Wälzlager
- 24: Einzug
- 25: Einzug
- 26: Kontaktzone
- 27: Kontaktzone
- 28: Innenring
- 29: Verschraubung
- 30: Innenbohrung
- 31: Führungsrolle
- 32a: Bohrung
- 32b: Bohrung
- 33: Außenring
- 34: Laufrolle
- 35a: Bord
- 35b: Bord
- 36: Wälzkörper
- 37: Ölbad

## Patentansprüche

1. Zugmitteltrieb einer Brennkraftmaschine, der ein antreibendes Rad (3) und zumindest ein angetriebenes Rad (4a, 4b) umfasst, die über ein als Endlosriemen ausgebildetes, von einem Ölnebel, insbesondere einem Schmieröl beaufschlagtes Zugmittel (2) verbunden sind, wobei der Zugmitteltrieb (1),
- in einem geschlossenen Einbauraum (13) integriert ist,
- ein Spannsystem (5) umfasst, bei dem das Zugmittel (2) mittels einer unmittelbar von einem Kraftmittel (9) beaufschlagten Führungsschiene (6a, 6b)vorgespannt ist, **dadurch gekennzeichnet, dass**
- die Führungsschiene (6a, 6b,) zwei zueinander beabstandete, jeweils an den Enden positionierte Führungsrollen (10, 11; 31) einschließt über die die Führungsschiene an dem Zugmittel (2) abgestützt ist,
- und die Führungsschiene (6a, 6b) im Bereich der Führungsrollen (10, 11; 31) ein U-förmiges Profil mit zwei axial beabstandeten Wandungen (16,17) einschließt,
- zumindest eine in die Wandung (16, 17) eingebrachte Öffnung oder Ausnehmung (27, 22) mit einer Lage einer Lagerung der Führungsrollen (10, 11; 31) übereinstimmt.

2. Zugmitteftrieb nach Anspruch (1), bei dem das Zugmittel (2) an einem Einzug (24, 25) der Wandungen (16, 17) der Führungsschiene (10) geführt ist.

3. Zugmitteltrieb nach Anspruch 1, mit einer als Blechkörper ausgebildeten, spanlos hergestellten, einstückigen Führungsschiene (6a, 6b), die ein weitestgehend U-förmiges Querschnittsprofil aufweist.

4. Zugmitteltrieb nach Anspruch 1, wobei die Führungsrolle (31) von einer aus Kunststoff hergestellten Laufrolle (34) umschlossen ist, die mit dem Zugmittel (2) in Kontakt steht.

5. Zugmitteltrieb nach Anspruch 1, wobei die für die Führungsrolle (31) bestimmten Wälzlager (23) keine Dichtungen aufweisen.

6. Zugmitteltrieb nach Anspruch 1, wobei die Führungsschiene (6a, 6b) über ein, eine ortsfeste Drehachse (7) einschließendes Drehlager (8) schwenkbar ist, wobei das Kraftmittel (9) beabstandet zum Drehlager (8) mit der Führungsschiene (6a, 6b) zusammenwirkt.

7. Zugmitteltrieb nach Anspruch 1, deren Führungsschiene (6a, 6b) zwei axial beabstandete, durch ein Stegblech (18) verbundene, als Flachprofil ausgebildete Wandungen (16, 17) umfasst, zwischen denen die Führungsrolle (10, 11; 31) auf Lagerbolzen (20) geführt und über Wälzlager (23) drehbar angeordnet sind.

8. Zugmitteltrieb nach Anspruch 1, bei dem die Führungsschiene (6a, 6b) als ein Kunststoff-Spritzgussteil gestaltet ist.

9. Zugmitteltrieb nach Anspruch 1, deren Führungsschiene (6a, 6b) mit einem hydraulisch wirkenden Kraftmittel (9) zusammenwirkt.

10. Zugmitteltrieb nach Anspruch 1, wobei als Kraftmittel (9) für die Führungsschiene (6a, 6b) eine als Schraubenfeder gestaltete Feder vorgesehen ist.

11. Zugmitteltrieb nach Anspruch 1, der als Kraftmittel (9) einen elektrisch ansteuerbaren, mit der Führungsschiene (6a, 6b) zusammenwirkenden Aktuator umfasst.

12. Zugmitteltrieb nach Anspruch 1, der in einem teilweise mit Öl befüllten Einbauraum (13) integriert ist und das Zugmittel (2) in einem Ölbad (37) umläuft.

13. Zugmitteltrieb nach Anspruch 1, der zum Antrieb von zumindest einer Nockenwelle einer Brennkraftmaschine bestimmt ist.

14. Zugmitteltrieb nach Anspruch 1, der an einer Brennkraftmaschine zum Antrieb einzelner Aggregate wie, Generator, Wasserpumpe, Lenkhilfspumpe oder Klimakompressor vorgesehen ist.

15. Zugmitteltrieb nach Anspruch 1, mit einem Zugmittel (2), das aus einem ölresistenten Werkstoff, insbesondere einer elastomeren Materialmassehergestellt ist.

16. Zugmitteltrieb nach Anspruch 1, der in einem der Brennkraftmaschine stirnseitig vorgelagerten, abgedichteten Gehäuse (12) eingesetzt ist, der einen geschlossenen Einbauraum (13) bildet.

## Claims

1. Traction drive for an internal combustion engine, which traction drive comprises a driving wheel (3) and at least one driven wheel (4a, 4b) which are connected via a traction means (2) designed as an endless belt and acted upon by an oil mist, in particular a lubricating oil, the traction drive (1)
- being integrated in a closed installation space (13),
- comprising a tension system (5) in which the traction means (2) is pretensioned by means of a guide rail (6a, 6b) acted upon directly by a force means (9),
**characterized in that**
- the guide rail (6a, 6b) includes two guide rollers (10, 11; 31) which are spaced apart from one another and are in each case positioned at the ends and via which the guide rail is supported on the traction means (2),
- and the guide rail (6a, 6b) includes, in the region of the guide rollers (10, 11; 31), a U-shaped profile with two walls (16, 17) spaced apart axially,
- at least one orifice or recess (21, 22) introduced into the wall (16, 17) coincides with a position of a mounting of the guide rollers (10, 11; 31).

2. Traction drive according to Claim 1, in which the traction means (2) is guided on a drawn-in portion (24, 25) of the walls (16, 17) of the guide rail (10).

3. Traction drive according to Claim 1, with a one-piece guide rail (6a, 6b) which is formed as a sheet-metal body and is produced in a non-cutting manner and which has an as far as possible U-shaped cross-sectional profile.

4. Traction drive according to Claim 1, the guide roller (31) being surrounded by a running roller (34) which is produced from plastic and which is in contact with the traction means (2).

5. Traction drive according to Claim 1, the rolling bearings (23) which are intended for the guide roller (31) having no seals.

6. Traction drive according to Claim 1, the guide rail (6a, 6b) being pivotable via a rotary bearing (8) including a fixed axis of rotation (7), the force means (9) cooperating, spaced apart from the rotary bearing (8), with the guide rail (6a, 6b).

7. Traction drive according to Claim 1, the guide rail (6a, 6b) of which comprises two axially spaced-apart walls (16, 17) which are connected by means of a web plate (18) and are formed as a flat profile and between which the guide rollers (10, 11; 31) are guided on bearing bolts (20) and are arranged rotatably via rolling bearings (23).

8. Traction drive according to Claim 1, in which the guide rail (6a, 6b) is configured as a plastic injection moulding.

9. Traction drive according to Claim 1, the guide rail (6a, 6b) of which cooperates with a hydraulically acting force means (9).

10. Traction drive according to Claim 1, the force means (9) provided for the guide rail (6a, 6b) being a spring configured as a helical spring.

11. Traction drive according to Claim 1, which comprises as force means (9) an electrically activatable actuator cooperating with the guide rail (6a, 6b).

12. Traction drive according to Claim 1, which is integrated in an installation space (13) partially filled with oil, and the traction means (2) revolves in an oil bath (37).

13. Traction drive according to Claim 1, which is intended for driving at least one camshaft of an internal combustion engine.

14. Traction drive according to Claim 1, which is provided on an internal combustion engine for driving individual assemblies, such as a generator, water pump, steering booster pump or air-conditioning compressor.

15. Traction drive according to Claim 1, with a traction means (2) which is produced from an oil-resistant material, in particular an elastomeric material mass.

16. Traction drive according to Claim 1, which is inserted in a sealed-off housing (12) which is mounted in front of the internal combustion engine on the end face and which forms a closed installation space (13).

## Revendications

1. Entraînement par moyen de traction pour un moteur à combustion interne, qui comprend une roue menante (3) et au moins une roue menée (4a, 4b), qui sont connectées par le biais d'un moyen de traction (2) réalisé sous forme de courroie sans fin, sollicité par un nuage d'huile, en particulier une huile lubrifiante,
l'entraînement par moyen de traction (1)
- étant intégré dans un espace de montage fermé (13),
- comprenant un système tendeur (5) avec lequel le moyen de traction (2) est précontraint au moyen d'un rail de guidage (6a, 6b) sollicité directement par un moyen de force (9),
**caractérisé en ce que**
- le rail de guidage (6a, 6b) comporte deux poulies de guidage (10, 11 ; 31) espacées l'une de l'autre et positionnées chacune aux extrémités, par le biais desquelles le rail de guidage est supporté sur le moyen de traction (2),
- le rail de guidage (6a, 6b) comporte dans la région des poulies de guidage (10, 11 ; 31) un profilé en forme de U avec deux parois espacées axialement (16, 17),
- et au moins une ouverture ou un évidement (21, 22) pratiqué dans la paroi (16, 17) coïncide avec une position d'un support des poulies de guidage (10, 11 ; 31).

2. Entraînement par moyen de traction selon la revendication 1, dans lequel le moyen de traction (2) est guidé sur un rentré (24, 25) des parois (16, 17) du rail de guidage (10).

3. Entraînement par moyen de traction selon la revendication 1, comprenant un rail de guidage (6a, 6b) d'une seule pièce réalisé sous forme de corps en tôle, fabriqué sans enlèvement de copeaux, qui présente un profil en section transversale sensiblement en forme de U.

4. Entraînement par moyen de traction selon la revendication 1, dans lequel la poulie de guidage (31) est entourée par un galet de roulement (34) fabriqué en plastique qui est en contact avec le moyen de traction (2).

5. Entraînement par moyen de traction selon la revendication 1, dans lequel les paliers à roulement (23) prévus pour la poulie de guidage (31) ne présentent pas de joints d'étanchéité.

6. Entraînement par moyen de traction selon la revendication 1, dans lequel le rail de guidage (6a, 6b) peut pivoter par le biais d'un palier rotatif (8) entourant un axe de rotation fixe (7), le moyen de force (9) coopérant avec le rail de guidage (6a, 6b) à distance du palier rotatif (8).

7. Entraînement par moyen de traction selon la revendication 1, dont le rail de guidage (6a, 6b) comprend deux parois (16, 17) espacées axialement, connectées par une âme en tôle (18), et réalisées sous forme de profilés plats, entre lesquelles la poulie de guidage (10, 11 ; 31) est guidée sur des boulons de palier (20) et est disposée de manière rotative sur des paliers de roulement (23).

8. Entraînement par moyen de traction selon la revendication 1, dans lequel le rail de guidage (6a, 6b) est réalisé sous forme de pièce moulée par injection en plastique.

9. Entraînement par moyen de traction selon la revendication 1, dont le rail de guidage (6a, 6b) coopère avec un moyen de force (9) à action hydraulique.

10. Entraînement par moyen de traction selon la revendication 1, dans lequel on prévoit comme moyen de force (9) pour le rail de guidage (6a, 6b) un ressort sous forme de ressort à boudin.

11. Entraînement par moyen de traction selon la revendication 1, qui comprend en tant que moyen de force (9) un actionneur commandable électriquement, coopérant avec le rail de guidage (6a, 6b).

12. Entraînement par moyen de traction selon la revendication 1, qui est intégré dans un espace de montage (13) partiellement rempli d'huile, le moyen de traction (2) circulant dans un bain d'huile (37).

13. Entraînement par moyen de traction selon la revendication 1, qui est prévu pour l'entraînement d'au moins un arbre à cames d'un moteur à combustion interne.

14. Entraînement par moyen de traction selon la revendication 1, qui est prévu sur un moteur à combustion interne pour l'entraînement d'unités individuelles comme un générateur, une pompe à eau, une pompe auxiliaire ou un compression de climatisation.

15. Entraînement par moyen de traction selon la revendication 1, comprenant un moyen de traction (2) qui est fabriqué en un matériau résistant à l'huile, en particulier une composition de matériau élastomère.

16. Entraînement par moyen de traction selon la revendication 1, qui est inséré dans un boîtier (12) hermétique monté du côté frontal avant le moteur à combustion interne, qui forme un espace de montage fermé (13).
